Europäisches Patentamt

European Patent Office

Office européen des brevets

(19)

(11) Numéro de publication: **0 027 093**
**B1**

(12) **FASCICULE DE BREVET EUROPEEN**

(45) Date de publication du fascicule du brevet: 28.09.83

(21) Numéro de dépôt: **80401439.7**

(22) Date de dépôt: **08.10.80**

(51) Int. Cl.³: **G 01 B 5/12**, G 01 B 5/00, G 01 B 5/20

(54) Dispositif de contrôle du diamètre d'un trou cylindrique usiné dans une pièce de forte épaisseur.

(30) Priorité: **08.10.79 FR 7924985**

(43) Date de publication de la demande:
**15.04.81 Bulletin 81/15**

(45) Mention de la délivrance du brevet:
**28.09.83 Bulletin 83/39**

(84) Etats contractants désignés:
**BE DE GB IT SE**

(56) Documents cités:
**US - A - 2 571 161**

(73) Titulaire: **Framatome**
**Tour Fiat 1 place de la Coupole**
**F-92400 Courbevoie (FR)**

(72) Inventeur: **Frontiere, Gilles**
**68 rue Marinet**
**F-71100 Chalon sur Saone (FR)**

(74) Mandataire: **Dupuy, Louis et al,**
**CREUSOT-LOIRE 15 rue Pasquier**
**F-75383 Paris Cedex 8 (FR)**

Courier Press, Leamington Spa, England.

Dispositif de contrôle du diamètre d'un trou cylindrique usiné dans une pièce de forte épaisseur

L'invention concerne un dispositif de contrôle du diamètre d'un trou cylindrique usiné dans une pièce de forte épaisseur, dans deux plans différents passant par l'axe du trou et suivant toute sa longueur.

Dans la fabrication des générateurs de vapeur, tels que les générateurs de vapeur utilisés dans les réacteurs nucléaires à eau sous pression, il est nécessaire d'effectuer le contrôle dimensionnel des trous cylindriques traversant la plaque tubulaire, après leur usinage.

En effet ces trous cylindriques de grande longueur traversant la plaque tubulaire reçoivent les tubes du faisceau qui sont dudgeonnés à l'intérieur de ces trous de la plaque tubulaire.

Pour assurer une bonne jonction entre les tubes et la plaque, il est donc nécessaire que les trous dans la plaque tubulaire soient de section constante sur toute l'épaisseur de la plaque.

Pour contrôler que cette section du trou est bien constante sur toute la traversée de la plaque, il faut effectuer des mesures de diamètre sur toute la longueur du perçage, et dans des plans axiaux, c'est-à-dire passant par l'axe du trou, différents.

On effectue généralement des contrôles de diamètre dans deux plans axiaux perpendiculaires et sur toute la longueur du trou traversant la plaque tubulaire.

Pour effectuer ce contrôle dimensionnel, on utilise un dispositif à commande manuelle permettant de déplacer à l'intérieur du trou un tampon portant un palpeur tel qu'un palpeur électronique permettant d'afficher sur un écran de visualisation les valeurs du diamètre avec une très bonne précision.

Pour chacun des trous, on effectue un balayage complet de toute la longueur du trou suivant deux plans axiaux faisant un angle de 90°.

Cette méthode de contrôle n'est cependant pas entièrement satisfaisante à cause de l'imprécision des mesures due au fait que la vitesse de déplacement du tampon portant le palpeur de mesure n'est pas constante et qu'on ne connaît pas avec précision la position du palpeur suivant la longueur du trou pendant les mesures.

D'autre part le déplacement par moyens manuels du tampon de mesure qui doit être reproduit pour chacun des tubes traversant la plaque tubulaire est une opération longue et pénible.

On connaît d'autre part un dispositif décrit dans le brevet FR—A—2.386.803 qui permet une certaine automatisation des opérations de contrôle dimensionnel d'un alésage.

Le dispositif décrit comporte une tête de mesure à touches mobiles déplaçable angulairement par un système de gachettes lorsqu'on a réalisé le positionnement et l'immobilisation axiale du dispositif dans l'alésage.

On peut effectuer un affichage de la mesure soit sur le corps de l'appareil soit sur un élément enregistreur indépendant.

Un tel dispositif permet de déceler des défauts dimensionnels de l'alésage dans un plan radial mais pas dans des plans axiaux disposés angulairement.

Le brevet US—A—2.571.161 décrit un dispositif de contrôle du diamètre interne d'un cylindre, dans deux plans perpendiculaires passant par l'axe du cylindre. Ce dispositif utilisé pour le contrôle des blocs-moteurs constitue un ensemble à poste fixe sur lequel on vient placer les blocs-moteurs à contrôler. Il n'est donc pas applicable au contrôle des plaques tubulaires de grande dimension et de forte épaisseur.

Cet ensemble, qui comporte un arbre mobile en translation suivant la direction axiale des cylindres porteur du moyen de contrôle d'alésage, un moyen moteur pour le déplacement de cet arbre commandé par un contact de fin de course pour l'arrêt de l'arbre en fin de mouvement dans un sens et dans l'autre et un moyen pour l'orientation de l'arbre avec blocage en position dans l'une ou l'autre des deux positions, permettant le contrôle dans l'un ou l'autre des plans axiaux, ne permet cependant pas de réaliser un cycle automatique complet des opérations de contrôle pour chacun des cylindres. Cela ne présente pas d'inconvénient dans le cas du contrôle d'un blocmoteur dont le nombre de cylindres est limité mais, dans le cas d'une plaque comportant des milliers de tubes, les opérations de contrôle seraient difficiles et fastidieuses. Enfin, le dispositif suivant le brevet US—A—2.571.161 ne permettrait pas de contrôler des trous de très grande longueur, sans une conception de ce dispositif qui le rendrait extrêmement encombrant et difficile à utiliser.

Le but de l'invention est donc de proposer un dispositif de contrôle du diamètre d'un trou cylindrique usiné dans une pièce de forte épaisseur, dans deux plans différents passant par l'axe du trou et suivant toute sa longueur, comportant un arbre mobile en translation dans un sens et dans l'autre dans la direction de l'axe du trou grâce à un moyen moteur et à des moyens de guidage, portant à l'une de ses extrémités un moyen de contrôle d'alésage, un moyen de commande pour l'arrêt du moyen moteur en fin de course de l'arbre, dans un sens et dans l'autre et un moyen pour l'orientation angulaire avec blocage en position de l'arbre dans l'une ou l'autre des deux positions permettant le contrôle dans l'un ou l'autre des plans axiaux, le diamètre de l'arbre et les dimensions transversales du moyen de contrôle permettant leur libre déplacement à l'intérieur du trou, ce dispositif pouvant être mis en place sur la plaque à contrôler, au niveau du trou et permettant de réaliser un cycle complet de déplacement du moyen de contrôle dans le trou, de manière totalement automatique.

Dans ce but, le dispositif selon l'invention comporte en outre un premier support percé d'une cavité centrale sur toute sa longueur et comportant des moyens pour sa fixation amovible sur la pièce de façon que la cavité soit dans le prolongement du trou, et un second support monté sur le premier support, rotatif autour d'un axe confondu avec l'axe du trou lorsque le premier support est fixé sur la pièce de forte épaisseur, comportant une cavité de direction axiale dans le prolongement de la cavité centrale du premier support à l'intérieur de laquelle se déplace l'arbre, le moyen d'orientation étant monté sur le premier support pour l'orientation du second support qui porte l'arbre par l'intermédiaire des moyens de guidage et étant commandé d'une part par les moyens de commande pour l'arrêt du moyen moteur pour sa mise en marche dans un sens ou dans l'autre quand le moyen moteur a fait effectuer une translation complète dans un sens ou dans l'autre au moyen de contrôle suivant la longueur du trou et d'autre part par des seconds moyens de commande pour son arrêt lorsqu'il a terminé son mouvement d'orientation du second support, dans un sens ou dans l'autre, moyens de commande qui assurent également la mise en marche de l'arbre en translation dans un sens ou dans l'autre, après chaque mouvement d'orientation du support.

On va maintenant décrire, en se référant aux figures jointes en annexe, à titre d'exemple non limitatif, une réalisation du dispositif suivant l'invention.

La figure 1 représente une vue de dessus du dispositif suivant l'invention avec son axe en position horizontale.

La figure 2 représente une vue suivant A de la figure 1.

La figure 3 représente une coupe suivant B B de la figure 2.

Le dispositif représenté sur les figures est utilisé pour le contrôle de diamètres des trous traversant la plaque tubulaire d'un générateur de vapeur d'un réacteur à eau sous pression.

Dans une telle plaque de forte épaisseur, les trous à l'intérieur desquels on dudgeonne les tubes du générateur de vapeur sont disposés suivant un réseau régulier à mailles carrées et traversent toute l'épaisseur de la plaque.

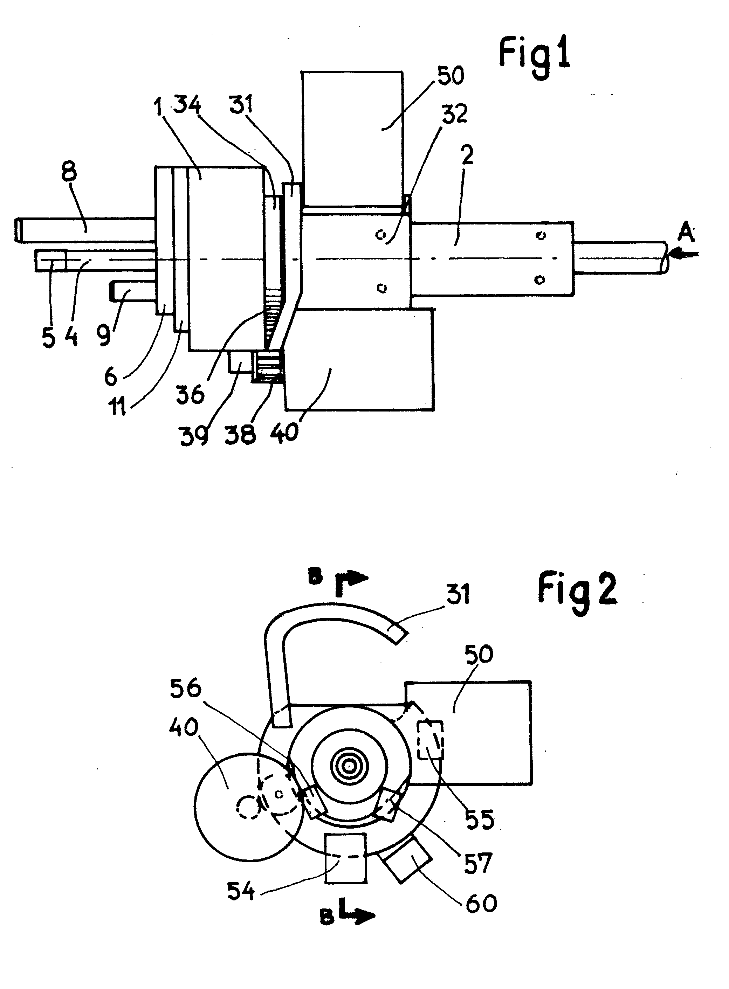

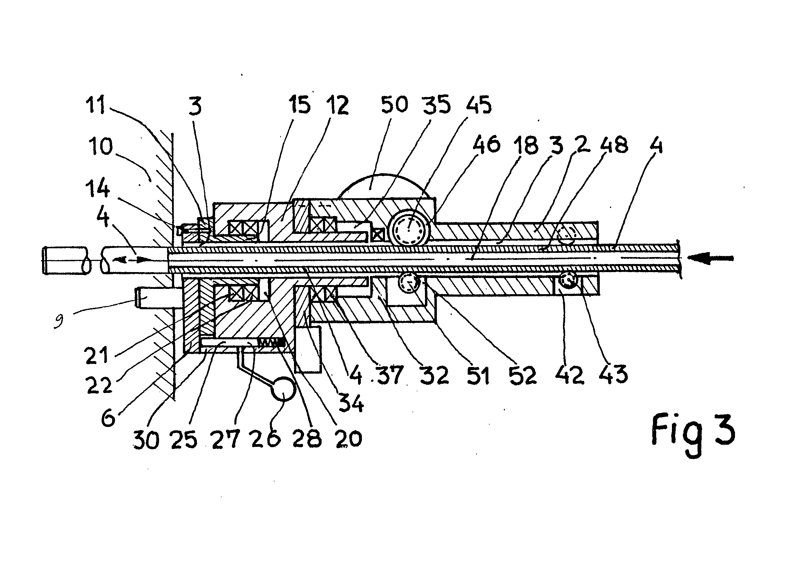

Ainsi qu'il est visible sur les figures 1, 2 et 3, le dispositif est consitué par un ensemble de deux supports 1 et 2 comportant une cavité centrale 3 les traversant entièrement, à l'intérieur de laquelle est disposé un arbre 4 portant à son extrémité le tampon de mesure 5.

Lorsque le dispositif est en place sur la plaque 10 en cours de contrôle, le support 1, ou premier support, assure la mise en place du dispositif de contrôle sur cette plaque grâce à deux centreurs 8 et 9 introduits dans deux trous adjacents de la plaque tubulaire.

Le premier support 1 comporte une plaque de base 6 portant les deux centreurs 8 et 9 qui lui sont reliés rigidement, une plaque intermédiaire 11 fixée à la plaque de base 6 par des via 14, solidaire d'un arbre creux 15 prolongeant la plaque 11 vers l'extérieur et un carter 12 ménageant avec l'arbre creux 15 suivant la direction axiale 18 une partie de la cavité axiale 3 dans laquelle est disposé l'arbre 4.

Le carter 12 ménage également un logement annulaire 20 autour de la surface externe de l'arbre 15 à l'intérieur duquel sont disposés des paliers à roulements 21 et 22 dont la bague externe est solidaire du carter 12 et dont la bague interne est solidaire de l'arbre 15. Les paliers 21 et 22 ont pour axe commun, l'axe 18 de l'ensemble du dispositif.

Grâce à ce montage on peut faire tourner la partie externe du support 1 portant le support 2 et l'arbre 4 autour de l'axe 18, par rapport à la partie interne du support 1 dont la position est fixe par rapport à la plaque tubulaire 10.

Un dispositif de blocage 25 comportant une poignée 26, un doigt 27 et un ressort 28 coopérant avec une ouverture 30 ménagée dans la plaque intermédiaire 11 du support 1 permet un blocage en rotation de la partie arrière du dispositif par rapport à la partie antérieure mise en place sur la plaque tubulaire 10.

En manoeuvrant la poignée 26 on peut placer le dispositif dans une position angulaire permettant son adaptation à la zone de la plaque tubulaire sur laquelle on effectue le contrôle.

Les centreurs 8 et 9 sont disposés sur la plaque de base 6 de façon que ces deux centreurs et l'arbre 4 disposés suivant l'axe 18 du dispositif puissent s'engager simultanément dans trois trous adjacents de la plaque tubulaire 10.

Une poignée 31 solidaire du carter 1 permet la préhension et le transport du dispositif.

Le support externe 2, ou deuxième support, est constitué par un carter allongé 32 percé d'une cavité axiale qui vient dans le prolongement de la cavité axiale du support 1 pour constituer le logement 3 de l'arbre 4 et une embase 34 fermant partiellement le carter 32 à son extrémité assurant la liaison avec le support 1.

Dans cette partie, le carter 32 ménage un logement 35 autour de la partie du carter 12 du support inférieur 1 constituant un arbre creux.

Dans le logement 35 sont disposés des paliers à roulements 37 dont la bague interne est reliée au carter 12 et dont la bague externe est reliée au carter 32.

Les paliers à roulements 37 ont pour axe commun l'axe 18 du dispositif et sont maintenus dans le logement 35 par l'intermédiaire de l'embase 34.

L'embase 34 porte sur une partie de sa périphérie un secteur denté 36 en prise avec un pignon 38 solidaire de l'arbre de sortie 39 d'un moteur 40 porté par le support 1.

Le secteur denté 36 en prise avec le pignon 38 permet de faire effectuer une rotation de 90° au support 2 par rapport au support 1, lorsque le moteur 40 est alimenté pendant un temps court suffisant pour effectuer la rotation. Le moteur 40 assure également le blocage en position angulaire du support 2 par rapport au support 1.

Le carter 32 porte dans des lumières telles que 42 un ensemble de trois galets tels que 43 disposés à 120° autour de la cavité axiale 3 du carter 32 légèrement saillants à l'intérieur de cette cavité.

Le carter 32 porte également un pignon 45 monté rotatif à l'intérieur d'un évidement 46 du carter et relié à l'axe d'un moteur 50 permettant sa mise en rotation.

Le pignon 45 est légèrement saillant à l'intérieur de la cavité axiale 3 du carter 32 et engrène avec une crémaillère 48 usinée sur une partie de la surface externe de l'arbre 4.

Un galet 51 monté dans une lumière 52 du carter 32 et légèrement saillant dans la cavité 3 de façon qu'il soit en contact de roulement avec l'arbre 4, permet d'exercer un effort radial sur l'arbre 4 antagoniste de l'effort exercé par le pignon 45.

Le pignon 45 et son galet antagoniste 51, ainsi que les galets 43 permettent un entrainement en translation axiale et un guidage de l'arbre 4 à l'intérieur du support 2.

L'arbre 4 se déplace librement à travers la cavité 3 axiale ménagée dans le support 1, cette cavité cylindrique ayant un diamètre supérieur à celui de l'arbre 4.

La longueur de la crémaillère usinée sur l'arbre 4 est suffisante pour que cet arbre puisse être déplacé en translation dans un mouvement d'une amplitude au moins égale à la longueur du trou à contrôler.

L'alimentation du moteur 50 permet de faire effectuer le mouvement de l'arbre 4 dans un sens et dans l'autre par inversion du sens de rotation.

Le support 1 porte d'autre part deux contacts électriques à poussoirs 54 et 55 coopérant avec la surface externe du support 2 ayant un profil constituant une came dans la zone se trouvant en face des contacteurs 54 et 55, lors des rotations du support 2 d'un quart de tour dans un sens et dans l'autre, par rapport au support 1.

Le contacteur 54 est actionné par la came usinée sur le support 2 lorsque ce support a terminé son mouvement d'orientation autour de l'axe 18, par rapport au support 1, dans un sens et ce contacteur 54 interrompt alors l'alimentation du moteur 40 et provoque l'alimentation du moteur 50 pour faire effectuer à l'arbre 4 et au moyen de contrôle de diamètres relié à son extrémité une translation à l'intérieur d'un trou de la plaque tubulaire.

Le contacteur 55 effectue les mêmes opérations pour l'autre position angulaire du support 2 par rapport au support 1.

Deux autres contacteurs à poussoirs 56 et 57 sont d'autre part disposés à 1'intérieur du carter 32, des trous de direction radiale débouchant dans la cavité centrale 3 assurant le passage des tiges de poussoirs actionnées par des billes légèrement saillantes à l'intérieur de la cavité 3 coopérant avec la surface externe de l'arbre 4 comportant des rainures, si bien que les tiges des poussoirs ne sont pas actionnées pendant le passage des rainures de l'arbre au niveau des contacteurs 56 et 57.

En fin de parcours de l'arbre 4 dans un sens et dans l'autre, cet arbre présente en face des contacteurs une zone ne comportant plus de rainures, si bien que les contacteurs 56 et 57 sont actionnés pour l'arrêt du moteur 50 et pour la mise en marche du moteur 40 dans un sens ou dans l'autre.

Le fonctionnement du dispositif peut être ainsi rendu entièrement automatique.

La plaque intermédiaire 11 porte d'autre part un contacteur 60 qui est enclenché lorsque le dispositif est dans sa position correcte audessus de la plaque contrôlée 10.

On peut alors déclencher le cycle de fonctionnement du dispositif pour le contrôle d'un trou de la plaque tubulaire.

Pour mettre le dispositif de contrôle en position de service, il suffit de régler l'orientation angulaire de la partie rotative du support 1 par rapport à la partie fixe de façon à pouvoir placer les centreurs 8 et 9 dans deux trous de la plaque tubulaire adjacents aux trous à contrôler. Pour cette mise en place, l'arbre 4 est en position entièrement rétractée à l'intérieur du dispositif et lorsque la mise en place est réalisée, l'axe 18 de l'arbre 4 est confondu avec l'axe du trou à contrôler, la disposition des centreurs 8 et 9 par rapport à l'axe du dispositif étant prévue pour reproduire la maille triangulaire de trois trous adjacents.

Lorsque la position du dispositif est correcte, le contracteur de sécurité 60 est enclenché et l'on peut démarrer le cycle des opérations de contrôle.

Le moteur 50 est alimenté grâce à l'un des contacteurs 54 et 55 de façon que le pignon 45 mis en rotation par le moteur fasse pénétrer le tampon de mesure (5) disposé à l'extrémité de l'arbre 4, à l'intérieur du trou à contrôler dans un mouvement à vitesse constante au cours duquel le palpeur électronique de mesure disposé à l'extrémité de l'arbre 4 balaye la surface interne du trou suivant deux génératrices contenues dans un plan axial contenant l'axe du palpeur.

Lors de sa pénétration à vitesse constante dans le trou, le palpeur électronique transmet des signaux digitaux représentatifs de la mesure de diamètres à un dispositif permettant la mémorisation des mesures effectuées en continu au cours de la progression du palpeur.

Cette mise en mémoire des valeurs mesurées du diamètre permet un affichage sur un organe de visualisation des valeurs maximum et minimum du diamètre à mesurer lors d'un balayage.

Le dispositif de mémorisation et de visualisation est relié par câbles au palpeur de mesure.

Lorsque le palpeur arrive en bout de course, c'est-à-dire à l'extrémité de sortie du trou dont on effectue le contrôle, l'arbre 4 actionne les contacteurs 56 et 57 qui permettent d'une part l'arrêt du moteur 50 et d'autre part la mise en rotation du moteur 40 de façon à amener le support 2 et l'arbre 4 qui est solidaire en rotation de ce support, dans une nouvelle position angulaire par rapport au trou.

La rotation du support 2 par rapport au support 1 et à la plaque se poursuit jusqu'au moment où l'un des contacteurs 54 et 55 est actionné par la partie de la surface du support 2 constituant une came agissant sur le poussoir du contacteur.

Le contacteur provoque alors l'arrêt du moteur 40 responsable de la mise en rotation du support 2 par l'intermédiaire du pignon 37 et du secteur denté 36 et la mise en fonctionnement du moteur 50 dans le sens inverse du mouvement précédent, si bien que la mise en rotation du pignon 45 engrenant avec la crémaillère 48 de l'arbre 4 provoque le retrait de l'arbre 4 qui s'accompagne du balayage de la surface intérieure du trou par le palpeur électronique dans le sens inverse du précédent et suivant deux génératrices disposées dans un plan perpendiculaire au plan axial de mesure de l'opération précédente.

En fin de course de l'arbre 4, les contacteurs 56 et 57 sont actionnés pour l'arrêt du moteur 50, et le démarrage du moteur 40 de façon à remettre le palpeur dans sa position angulaire de départ, ce qui termine le cycle d'opération constituant une mesure relative à un trou de la plaque tubulaire.

Les valeurs maximum et minimum du diamètre à mesurer peuvent être enregistrées pour chacun des plans de mesure ou au contraire pour l'ensemble des deux plans axiaux de mesure.

Le contrôle étant terminé pour l'un des trous de la plaque tubulaire, on change l'appareil de contrôle de position grâce à la poignée 31 et éventuellement en modifiant l'orientation du dispositif par rapport à la plaque de base grâce à la poignée 26, en introduisant les centreurs 8 et 9 dans des trous adjacents au nouveau trou à contrôler.

Lorsque l'appareil est en place et que le contacteur 60 est enclenché, un nouveau cycle de mesure peut commencer.

On voit que les principaux avantages du dispositif suivant l'invention sont de permettre de réaliser les mesures de diamètres suivant toute la longueur du trou et dans deux plans axiaux disposés angulairement, par exemple à 90°, de façon entièrement automatique et avec une vitesse de déplacement du palpeur de mesure extrêmement constante. On voit également que la mise en place du dispositif en une position de contrôle quelconque sur la plaque tubulaire est extrêmement facile à réaliser.

D'autre part il est possible d'obtenir grâce à la mémorisation des valeurs mesurées au cours du déplacement une sortie sous une forme quelconque visuelle ou imprimée d'une valeur quelconque représentative des mesures effectuées.

Le dispositif de contrôle suivant l'invention est donc particulièrement utile lorsqu'il s'agit de contrôler un très grand nombre de trous disposés suivant un réseau régulier comme dans le cas d'une plaque tubulaire d'un générateur de vapeur d'un réacteur à eau sous pression.

D'autre part, dans le cas où l'on désire effectuer successivement le contrôle de plaques tubulaires comportant des perçages de diamètres différents disposés suivant des réseaux dont la maille a des dimensions différentes, il suffit pour passer d'une opération de contrôle sur une plaque tubulaire à une opération de contrôle sur une autre plaque tubulaire de changer la plaque portant les centreurs, le tampon porte-palpeur et éventuellement l'arbre à crémaillère à l'extrémité duquel est fixé le tampon.

L'invention ne se limite pas au mode de réalisation qui vient d'être décrit; elle en comporte au contraire toutes les variantes.

C'est ainsi qu'il est possible d'imaginer des moyens pour faire varier la position angulaire du second support par rapport au premier différent d'un moteur entraînant un pignon et un secteur denté et qu'il est possible d'imaginer des moyens moteurs pour le déplacement en translation de l'arbre axial portant le palpeur de mesure différents d'un dispositif pignon-crémaillère.

De la même façon on peut réaliser la commande des mouvements du second support et de l'arbre d'une façon différente de ce qui a été décrit.

On peut aussi prévoir la remise du palpeur dans sa position de départ au début d'un cycle.

A la place de dispositifs mécaniques, on peut utiliser des dispositifs hydrauliques ou pneumatiques pour réaliser les déplacements de l'arbre et les modifications de la position angulaire du second support par rapport au premier.

On peut d'autre part utiliser tout type de palpeur disposé à l'extrémité de l'arbre pénétrant dans le trou à contrôler, à partir du moment où ce dispositif est suffisamment sensible.

D'autre part le premier support peut être réalisé en deux parties pour permettre une orientation d'une de ces parties et du second support par rapport à la partie du premier support servant à la fixation sur la plaque tubulaire ou au contraire en une seule partie si l'ensemble des trous de la plaque tubulaire peut être contrôlé sans modifier la position relative des centreurs et de l'axe du dispositif.

D'autre part l'invention s'applique dans tous les cas où l'on veut réaliser un contrôle dimensionnel d'un grand nombre de trous pratiqués dans une pièce de forte épaisseur et constituant un réseau régulier sur les faces de cette pièce. Son application dépasse donc le cadre de la fabrication et du contrôle des plaques tubulaires de générateurs de vapeur et l'on peut même imaginer l'utilisation de l'appareil pour le contrôle de trous isolés dans des pièces de forte épaisseur, le premier support devant alors être pourvu de dispositifs permettant son adaptation et sa fixation sur la pièce sur laquelle on effectue le contrôle.

**Revendications**

1. Dispositif de contrôle du diamètre d'un trou cylindrique usiné dans une pièce (10) de forte épaisseur, dans deux plans différents passant par l'axe du trou et suivant toute sa longueur, comportant un arbre (4) mobile en translation dans un sens et dans l'autre dans la direction de l'axe du trou grâce à un moyen moteur (50) et à des moyens de guidage (43, 45), portant à l'une de ses extrémités un moyen de contrôle d'alésage (5), un moyen de commande (56, 57) pour l'arrêt du moyen moteur (50) en fin de course de l'arbre (4), dans un sens et dans l'autre, et un moyen (40) pour l'orientation angulaire avec blocage en position, de l'arbre (4) dans l'une ou l'autre des deux positions permettant le contrôle dans l'un ou l'autre des plans axiaux, le diamètre de l'arbre (4) et les dimensions transversales du moyen de contrôle (5) permettant leur libre déplacement à l'intérieur du trou, caractérisé par le fait qu'il comporte en outre un premier support (1) percé d'une cavité centrale (3) sur toute sa longueur et comportant des moyens (8, 9) pour sa fixation amovible sur la pièce (10) de façon que la cavité (3) soit dans le prolongement du trou, et un second support (2) mouté sur le premier support (1), rotatif autour d'un axe confondu avec l'axe du trou lorsque le premier support est fixé sur la pièce de forte épaisseur (10), comportant une cavité de direction axiale dans le prolongement de la cavité centrale (3) du premier support (1) à l'intérieur de laquelle se déplace l'arbre (4) le moyen d'orientation (40) étant monté sur le premier support (1) pour l'orientation du second support (2) qui porte l'arbre (4) par l'intermédiaire des moyens de guidage (43, 45) et étant commandé d'une part par les moyens de commande (56—57) pour l'arrêt du moyen moteur (50) pour sa mise en marche dans un sens ou dans l'autre quand le moyen moteur (50) a fait effectuer une translation complète dans un sens ou dans l'autre au moyen de contrôle (5) suivant la longueur du trou et d'autre part par des second moyens de commande (54—55) pour son arrêt lorsqu'il a terminé son mouvement d'orientation du second support (2), dans un sens ou dans l'autre, moyens de commande (54—55) qui assurent également la mise en marche de l'arbre (4) en translation dans un sens ou dans l'autre, après chaque mouvement d'orientation du support (2).

2. Dispositif de contrôle suivant la revendication 1, caractérisé par le fait que le premier support (1) comporte deux parties, une première partie (6, 11) permettant la fixation sur la pièce (10) de forte épaisseur au niveau du trou à contrôler et une seconde partie (12) montée rotative sur la première autour d'un axe confondu avec l'axe du trou lorsque le dispositif est en position de contrôle, muni d'un moyen de blacage (25) dans une position angulaire quelconque par rapport à la première partie.

3. Dispositif de contrôle suivant l'une quelconque des revendications 1 et 2, caractérisé par le fait que le moyen d'orientation (40) est consitué par un moteur électrique fixé sur le premier support (1) dont l'axe entraîne un pignon (38) engrenant avec un secteur denté (36) porté par le second support (2).

4. Dispositif de contrôle suivant l'une quelconque des revendications 1, 2 et 3, caractérisé par le fait que le moyen moteur (50) est constitué par un moteur électrique fixé sur le second support (2) dont l'axe entraîne un pignon (45) engrenant avec une crémaillère (48) solidaire de l'arbre (4) portant le moyen de contrôle (5).

5. Dispositif de contrôle suivant l'une quelconque des revendications 1, 2, 3 et 4, caractérisé par le fait que les moyens de commande du moyen d'orientation (40) et du moyen moteur (50) sont constitués par des contacts à poussoirs actionnés, les uns (54, 55) par une came usinée sur le second support (2), lors de la rotation de ce second support par rapport au premier, les autres (56, 57) par l'arbre (4) au cours de ses mouvements de translation axiale.

6. Dispositif de contrôle suivant l'une quelconque des revendications 1 à 5, dans le cas où un grand nombre de trous cylindriques sont usinés suivant un réseau régulier dans une pièce (10) de forte épaisseur, caractérisé par le fait que les moyens de fixation du premier support sur la pièce de forte épaisseur sont constitués par une plaque de base (6) portant des dispositifs de centrage (8, 9) consitués par des tiges cylindriques d'un diamètre voisin de celui des trous de la pièce de forte épaisseur, les dispositifs de centrage (8, 9) et l'arbre (4) portant le moyen de contrôle étant disposés de façon à venir en coïncidence, les uns et les autres, avec un ensemble de trous de la pièce de forte épaisseur.

**Patentansprüche**

1. Vorrichtung zur Kontrolle des Durchmessers einer in einem dickwandigen Werkstück (10) bearbeiteten Zylinderbohrung in zwei unterschiedlichen, durch die Bohrungsachse laufenden Ebenen und gemäß deren gesamten Länge, bestehend aus einer über ein motorisches Mittel (50) und über Führungsmittel (43, 45) im Sinne der Bohrungsachse in die eine und andere Richtung längsverschiebbaren Welle (4), welche an einem Ende ein Bohrungskontrollmittel (5) trägt, sowie aus einem Betätigungsmittel (56, 57) zum Stillsetzen des Motormittels (50) in der Hubendstellung der Welle (4) in der einen und anderen Richtung, und aus einem Mittel (40) zur winkelartigen Orientierung mit Positionsfeststellung der Welle (4) in jeweils der einen oder anderen Lage, wodurch die Kontrolle in der einen oder anderen Axialebene möglich ist, wobei der Durchmesser der Welle (4) und die Quermasse des Kontrollmittels (5) deren freie Bewegung im Inneren der Bohrung ermöglichen, dadurch gekennzeichnet, daß sie ausserdem eine erste Abstützung (1) mit einem über ihre gesamte Länge durchgebohrten zentralen Hohlraum (3) aufweist, welche Mittel (8, 9) umfaßt zu deren abnehmbaren Befestigung auf dem Werkstück (10), so daß der Hohlraum (3) in der Bohrungsverlängerung liegt, und eine auf der ersten Abstützung (1) montierten zweite Abstützung (2) umfaßt, die um eine mit der Bohrungsachse zusammenfallenden Achse drehbar ist, wenn die erste Abstützung an dem dickwandigen Werkstück (10) befestigt ist, und einen axial ausgerichteten, in der Verlängerung des zentralen Hohlraumes (3) der ersten Abstützung (1) liegenden Hohlraum aufweist, in dessen Inneren sich die Welle (4) verschiebt, wobei das Orientierungsmittel (40) auf der ersten Abstützung (1) montiert ist zur Ausrichtung der die Welle (4) über die Führungsmittel (43, 45) tragenden zweiten Abstützung (2), und einerseits über die Betätigungsmittel (56, 57) zum Stillsetzen des motorischen Mittels (50) und zu dessen Inbetriebsetzung in der einen oder anderen Richtung, wenn das Kontrollmittel (5) gemäß der Bohrungslänge in die eine oder andere Richtung vollständig verfahren wurde, und anderseits über weitere Betätigungsmittel (54, 55) zu dessen Stillsetzung, wenn es die Orientierungsbewegung der zweiten Abstützung (2) beendet hat, angetrieben wird, wobei die Betätigungsmittel (54, 55) ebenfalls die Welle (4) zur Verschiebung in die eine oder andere Richtung nach jeder Orientierungsbewegung der Abstützung (2) in Betrieb setzen.

2. Kontrollvorrichtung nach Anspruch 1, dadurch gekennzeichnet, daß die erste Abstützung (1) zweiteilig ist, wobei ein erstes Teil (6, 11) die Befestigung an dem dickwandigen Werkstück (10) bei der zu kontrollierenden Bohrung ermöglicht und ein zweiten Teil (12) das auf dem ersten um eine mit der Bohrungsachse zusammenfallenden Achse drehbar montiert ist, wenn die Vorrichtung in der Kontrollstellung ist, sowie ein Mittel (25) zur Feststellung in irgendeiner Winkellage zu dem ersten Teil aufweist.

3. Kontrollvorrichtung nach einem der Ansprüche 1 und 2, dadurch gekennzeichnet, daß das Orientierungsmittel (40) aus einem auf der ersten Abstützung (1) befestigten Elektromotor besteht, dessen Welle ein Zahnrad (38) antreibt, das mit einem auf der zweiten Abstützung (2) angeordneten Zahnsegment (36) in Eingriff steht.

4. Kontrollvorrichtung nach einem der Ansprüche 1, 2 und 3, dadurch gekennzeichnet, daß das motorische Mittel (50) aus einem auf der zweiten Abstützung (2) befestigten Elektromotor besteht, dessen Achse ein mit einer Zahnstange (48) im Eingriff stehenden Zahnrad (45) antreibt, welche mit der das Kontrollmittel (5) aufnehmenden Welle (4) fest verbunden ist.

5. Kontrollvorrichtung nach einem der Ansprüche 1, 2, 3 und 4, dadurch gekennzeichnet, daß die Betätigungsmittel von dem Orientierungsmittel (40) und dem Motormittel (50) Tastschalter sind, wobei die Betätigung der einen (54, 55) über eine an der zweiten Abstützung (2) bearbeiteten Nocke bei der Umdrehung dieser zweiten Abstützung zur ersten und der anderen (56, 57) durch die Welle (4) bei deren Axialbewegungen erfolgt.

6. Kontrollvorrichtung nach einem der Ansprüche 1 bis 5, wobei eine große Anzahl Zylinderbohrungen gemäß einem regelmässigen Gitter in einem dickwandigen Werkstück (10) bearbeitet wurden, dadurch gekennzeichnet, daß die Befestigungsmittel der ersten Abstützung en dem dickwandigen Werkstück aus einer Grundplatte (6) mit Zentriereinrichtungen (8, 9) gebildet sind, die aus Zylinderstiften mit einem dem Durchmesser der Bohrungen des dickwandigen Werkstückes annähernden Durchmesser bestehen, wobei die Zentriereinrichtungen (8, 9) und die Welle (4) mit dem Kontrollmittel derart angeordnet werden, daß sie sich zusammen mit einer Anzahl Bohrungen des dickwandigen Werkstückes decken.

**Claims**

1. Device for checking the diameter of a cylindrical hole machined in a component (10) of great thickness, in two different planes passing through the axis of the hole and over its entire length, incorporating a shaft (4) movable in translation in one direction and in the other in the direction of the axis of the hole by means of a motor means (50) and guide means (43, 45), carrying at one of its ends a bore-checking means (5), a control means (56, 57) for stopping the motor means (50) at the end of travel of the shaft (4) in one direction and in the other, and a means (40) for the angular orientation, with locking in position, of the shaft (4) in one or the other of the two positions allowing checking in one or other of the axial planes, the diameter of the shaft (4) and the transverse dimensions of the checking means (5) allowing their free displacement within the hole, characterised in that it also incorporates a first support (1) perforated with a central cavity (3) over its entire length and possessing means (8, 9) for fastening it removably to the component (10) in such a way that the cavity (3) is in the prolongation of the hole, and a second support (2) which is mounted on the first support (1) and rotates about an axis merging with the axis of the hole when the first support is fastened to the component of great thickness (10), and which possesses an axially directed cavity in the prolongation of the central cavity (3) of the first support (1), within which the shaft (4) is displaced, the orientation means (40) being mounted on the first support (1) for orienting the second support (2) carrying the shaft (4) by means of the guide means (43, 45) and being controlled, on the one hand, by the control means (56, 57) for stopping the motor means (50) for setting it in motion in one direction or in the other when the motor means (50) has caused the checking means (5) to effect a complete translation in one direction or in the other along the length of the hole and, on the other hand, by second control means (54, 55) for stopping it when it has ended its movement for the orientation of the second support (2) in one direction or in the other, these control means (54, 55) also ensuring that the shaft (4) is set in motion in translation in one direction or in the other after each movement for orientation of the support (2).

2. Checking device according to Claim 1, characterised in that the first support (1) comprises two parts, a first part (6, 11) allowing it to be fastened to the component (10) of great thickness at the level of the hole to be checked, and a second part (12) mounted rotatably on the first part about an axis merging with the axis of the hole when the device is in the checking position, this being provided with a means (25) for locking in any angular position in relation to the first part.

3. Checking device according to either one of Claims 1 and 2, characterised in that the orientation means (40) consists of an electric motor which is fastened to the first support (1) and the axle of which drives a pinion (38) engaging with a toothed sector (36) carried by the second support (2).

4. Checking device according to any one of Claims 1, 2 and 3, characterised in that the motor means (50) consists of an electric motor which is fastened to the second support (2) and the axle of which drives a pinion (45) engaging with a rack (48) fixed to the shaft (4) carrying the checking means (5).

5. Checking device according to any one of Claims 1, 2, 3 and 4, characterised in that the means for controlling the orientation means (40) and the motor means (50) consist of pushrod contacts, some (54, 55) actuated by a cam machined on the second support (2), during the rotation of the second support in relation to the first, and the others (56, 57) actuated by the shaft (4) during its movements of axial translation.

6. Checking device according to any one of Claims 1 to 5, in the event that a large number of cylindrical holes are machined according to a regular network in a component (10) of great thickness, characterised in that the means for fastening the first support to the component of great thickness consist of a base plate (6) carrying centring devices (8, 9) which consist of cylindrical rods of a diameter similar to that of the holes in the component of great thickness, the centring devices (8, 9) and the shaft (4), which carries the checking means, being arranged in such a way as to coincide respectively with a set of holes in the component of great thickness.

Fig 1

Fig 2

Fig 3